# EUROPÄISCHE PATENTSCHRIFT

(11) **EP 1 198 370 B1**
(45) Veröffentlichungstag und Bekanntmachung des Hinweises auf die Patenterteilung: **17.03.2004**
(21) Anmeldenummer: 00936725.1
(22) Anmeldetag: 10.05.2000
(51) Int. Cl.: B60R 16/02

(54) **FAHRZEUGKOMMUNIKATIONSSYSTEM MIT ANZEIGE-/BEDIENEINHEIT**
VEHICLE COMMUNICATION SYSTEM WITH DISPLAY/CONTROL UNIT
SYSTEME DE COMMUNICATION POUR VEHICULE AVEC UNITE D'AFFICHAGE ET DE COMMANDE

(30) Priorität: 26.06.1999 DE 19929330
(43) Veröffentlichungstag der Anmeldung: 24.04.2002
(73) Patentinhaber: DaimlerChrysler AG, 70567 Stuttgart (DE); SIEMENS AKTIENGESELLSCHAFT, 80333 München (DE)
(72) Erfinder: DAUNER, Oskar, F-78610 Le Perray en Yvelines (FR); FÖRSTER, Robert, D-93086 Wörth (DE); HÖSS, Konrad, D-92331 Parsberg (DE); JANSCHE, Alfred, D-93164 Waldetzenberg (DE); SCHNEIDER, Sandra, D-70499 Stuttgart (DE)
(86) Internationale Anmeldenummer: PCT/EP2000/004154
(87) Internationale Veröffentlichungsnummer: WO 2001/000452

(56) Entgegenhaltungen:
- WO-A-98/51991
- WO-A-99/06987
- DE-A- 19 625 002
- DE-A- 19 725 915
- DE-A- 19 739 357
- Neumann, K. J.; Kiencke, U.; Maisch, A.: "Ein aufkommender Standard für verteilte Systeme im Kfz"; atp - Automatisierungstechnische Praxis 40 (1998) 4, Seiten 22-31 XP001018290

## Beschreibung

Die Erfindung bezieht sich auf ein Fahrzeugkommunikationssystem.

In modernen Kraftfahrzeugen, insbesondere auch Automobilen, besteht allgemein der Wunsch, immer mehr Bedienaktionen des Benutzers, für die früher eine Vielzahl unterschiedlicher, mechanisch zu betätigender Bedienelemente verwendet wurden, elektronisch zu erfassen und zu verarbeiten, speziell unter Zuhilfenahme grafischer Benutzeroberflächen, mit deren Hilfe der Benutzer alle oder wenigstens einen Teil der im Fahrzeug verbauten Steuergeräte menügesteuert an einem Bildschirm ansteuern kann. Unter dem Begriff "grafische Benutzeroberfläche" ist dabei wie üblich nicht nur die bloße bildliche Darstellung von Bildschirmseiten zu verstehen, sondern er umfaßt die entsprechenden, in Hard- und Software realisierten Mittel zur Bewirkung aller damit zusammenhängenden Aktionen, wie die Zuweisung der Funktionalitäten zu den einzelnen, mit einer Bildschirmseite angezeigten Elementen und die Steuerung des Ablaufs der betreffenden Funktionalität bei Aufruf/Auswahl derselben, d.h. die grafische Benutzeroberfläche bildet einen zentralen Bestandteil der aus Hardware- und Software-Komponenten bestehenden Schnittstelle zwischen System und Benutzer.Ermöglicht wird eine solche Systemauslegung unter anderem durch die zunehmende Vernetzung der Steuergeräte über einen Datenbus, der gegebenenfalls aus mehreren, miteinander verbundenen Busteilen unterschiedlicher Typen bestehen kann, wie sie z.B. unter den Abkürzungen CAN (Controller Area Network) und MOST (Media Oriented System Transport) im Fahrzeugeinsatz gebräuchlich sind. Eine komfortable Möglichkeit der Benutzerinteraktion mit dem elektronischen Fahrzeugsystem ist auch wegen der zunehmenden Implementierung von Telematik-Anwendungen wünschenswert. Je nach Art und Anzahl der verschiedenen, im Fahrzeug implementierten Applikationen sind an den Fahrzeugdatenbus eine oder mehrere Anzeige-/Bedieneinheiten als Benutzerschnittstellen des Fahrzeugsystems angeschlossen, die von vorzugsweise einer gemeinsamen Recheneinheit gesteuert werden. Daneben kann die Recheneinheit über eine entsprechende Kommunikationseinheit mit Steuergeräteeinheiten, oder kurz Steuereinheiten, des Fahrzeugs kommunizieren, insbesondere als übergeordnete Steuerung. In jüngerer Zeit entwickelte Systemauslegungen sind z.B. in der Offenlegungsschrift DE 196 25 002 A1 und dem Zeitschriftenaufsatz K. J. Neumann et al., Ein aufkommender Standard für verteilte Systeme im Kfz, atp 4/98, S. 22 beschrieben.

In herkömmlichen modernen Fahrzeugkommunikationssystemen dieser Art kommt oftmals eine auf einer Bitmap-Darstellung basierende grafische Benutzeroberfläche zum Einsatz, die den Vorteil hat, mit relativ wenig Rechenkapazität auszukommen, wobei die diversen angezeigten Interaktionselemente, wie Fenster und Buttons zur Laufzeit des Systems fest an einem jeweils festgelegten Ort abgelegt sind. Bei Änderungen erfordert dies jedoch die Änderung jeweils der gesamten, als Einheit starr abgelegten Bitmap-Seite. Ein solche Benutzeroberfläche kommt beispielsweise in von der Mitanmelderin Siemens AG kommerziell vertriebenen Kommunikationsmanagementsystemen zum Einsatz (z. B. PCM), das in Serienfahrzeugen verbaut wird.

In der WO 99/06987 A2, die den nächstkommenden Stand der Technik darstellt, wird ein Bedienmanagement für ein Fahrzeugkommunikationssystem beschrieben, das die Bedienung von allen Systemkomponenten eines Fahrzeuges ermöglicht.

Das Bedienmanagement wird über eine grafische Benutzeroberfläche auf einer Anzeige-/Bedieneinheit realisiert. Eine durch die grafische Benutzeroberfläche benutzbare Funktion erlaubt es dem Nutzer, sich Informationen in Form von HTML-Seiten anzusehen. Eine zentrale Recheneinheit steuert über einen Datenbus die Anzeige-/Bedieneinheit und die anderen Systemkomponenten.

In der DE 197 25 915 A1 ist eine rechnergestützte Diagnoseeinrichtung für elektronisch gesteuerte und innerhalb eines Gesamtsystems angeordnete Teilsysteme, insbesondere in einem Kraftfahrzeug, beschrieben, die Mittel zur Erzeugung von WEB-Seiten, z. B. im HTML- oder SGML-Format beinhaltet, die in den jeweiligen Teilsystemen oder in einem zentralen Server implementiert sind. Die WEB-Seiten enthalten die spezifischen Daten des Gesamtsystems und die diagnoserelevanten Daten der Teilsysteme. Des weiteren ist eine Diagnoseschnittstelle zur Interaktion zwischen den Teilsystemen und außerhalb des Gesamtsystems vorhandenen elektronischen Geräten vorgesehen.

In der WO 98/51991 A1 wird ein fahrzeugexternes Diagnosesystem beschrieben, das Informationen in für das Internet üblichen Formaten zur Verfügung stellt.

In der DE 197 39 357 A1 ist ein Fahrzeugkommunikationssystem mit einem Datenbus offenbart, bei dem ein als Dateneingabe- und Datenausgabegerät fungierendes Terminalmodul vorgesehen ist, das einen Busknoten bildet und ein oder mehrere Bedienelemente zum Steuern von mehreren im Kraftfahrzeug vorhandenen, weitere Busknoten bildenden Funktionsmodulen, einen Bilschirm, eine Speichereinheit, in der auf dem Bildschirm anzuzeigende grafische Elemente abrufbar abgelegt sind, und eine Prozessoreinheit zur Darstellung der grafischen Benutzeroberfläche auf dem Bildschirm, zur Auswertung der Bedienelemente und zur Kommunikation mit den Funktionsmodulen umfasst. Die Kommunikation zwischen dem Terminalmodul und den Funktionsmodulen erfolgt vorzugsweise unter Verwendung einer protokollarischen Schnittstelle durch eine mit dem HTML-Standard vergleichbare Seitenbeschreibungssprache, wozu die Funktionsmodule entsprechend auszulegen sind.

Der Erfindung liegt daher als technisches Problem die Bereitstellung eines Fahrzeugkommunikationssystems der eingangs genannten Art zugrunde, das mit für Fahrzeuganwendungen vertretbarem Rechenaufwand eine möglichst komfortable Bedienbarkeit des Systems über die eine oder mehrere Anzeige-/Bedieneinheiten unter Nutzung einer grafischen Benutzeroberfläche ermöglicht.

Die Erfindung löst dieses Problem durch die Bereitstellung eines Fahrzeugkommunikationssystems mit den Merkmalen des Anspruchs 1. Dieses System beinhaltet charakteristischerweise eine auf dem z.B. in der Internet-Welt verwendeten, standardisierten Formulierung HTML/XML-Seitenformat (HTML: Hyper Text Markup Language, XML: Extensible Markup Language) basierende grafische Benutzeroberfläche, die in der wenigstens einen Anzeige-/Bedieneinheit oder in der diese steuernden Recheneinheit oder verteilt auf beide Einheiten implementiert ist. Die Verwendung einer solchen grafischen Benutzeroberfläche mit HTML/XML-Seitenformat ermöglicht Änderungen z.B. von Teilinhalten einer Bildschirmseite sehr viel einfacher als auf einer Bitmap-Darstellung basierende grafische Benutzeroberflächen, da die Seiten im HTML/XML-Format nicht als Gesamtheit zur Laufzeit des Systems starr abgelegt sind, sondern lediglich deren Bestandteile. Zudem ist es durch die Verwendung des HTML/XML-Formates möglich, den Ablauf aufeinanderfolgender Seiten während der Ausführung einer Applikation programmgesteuert variabel in Abhängigkeit von festlegbaren Bedingungen zu gestalten. Andererseits hat das vorliegende System den Vorteil, daß es im Gegensatz z.B. zu windows™-basierten Benutzeroberflächen ohne ein standardisiertes Betriebssystem und daher mit entsprechend weniger Rechenaufwand auskommt.

Es ist ein Browser, d.h. Interpreter, für die HTML/XML-Seiten in der Anzeige-/Bedieneinheit implementiert und außerdem eine MMI(Mensch-Maschine-Interface)-Anwendungseinheit zur Generierung entsprechender MMI-Seiten im HTML/XML-Format vorgesehen, die sich in der Recheneinheit befindet oder auf die Recheneinheit und die Anzeige-/Bedieneinheit verteilt implementiert ist. Der Browser unterstützt in der Anzeige-/Bedieneinheit beispielsweise HTML-, XML-, Bild- und Textdateien.

In einer Weiterbildung des Systems nach Anspruch 2 ist in der Anzeige-/Bedieneinheit und/oder der Recheneinheit ein ActiveX-Modul implementiert, das Anzeigeelemente und Interaktionskomponenten umfaßt. Diese Maßnahme ist speziell bei Verwendung des HTML-Formats zweckmäßig, während XML so leistungsfähig ist, daß ActiveX-Module entbehrlich sind. Das durch Verwendung dieses standardisierten Moduls ermöglichte Einbinden von ActiveX-Interaktionskomponenten in HTML-Seiten erlaubt die Benutzung bzw. den Aufruf sowohl von lokal vorhandenen Software-Komponenten als auch von Komponenten, die sich in anderen, an den Datenbus angeschlossenen Geräteeinheiten befinden. Dabei ist es zweckmäßig, wichtige ActiveX-Anzeigeelemente und/oder -Interaktionskomponenten in einer Bibliothek zu halten, die in der Anzeige-/Bedieneinheit implementiert wird, so daß eine vergleichsweise schnelle Reaktion auf Benutzereingaben möglich ist und Software-Ergänzungen bzw.-Aktualisierungen sowie die Integration neuer Funktionen in der steuernden Recheneinheit relativ einfach vorgenommen werden können. Weitergehend ist in einer Ausgestaltung des Systems nach Anspruch 3 ein MMI-Interaktionskontrollmodul vorgesehen, über das die ActiveX-Interaktionskomponenten durch einen zentralen Steuerteil der Recheneinheit angesteuert werden können. In weiterer Ausgestaltung der Erfindung nach Anspruch 4 dient dieser zentrale Steuerteil der Recheneinheit auch zur Ansteuerung einer oder mehrerer, an den Datenbus über zugehörige Kommunikationseinheiten angeschlossener Steuergeräteeinheiten.

Eine vorteilhafte Ausführungsform der Erfindung ist in den Zeichnungen dargestellt und wird nachfolgend beschrieben. Hierbei zeigen:
- Fig. 1: eine Blockdiagrammdarstellung der Architektur eines Fahrzeugkommunikationssystems und
- Fig. 2: ein Blockdiagramm der Softwaremodul-Architektur in einer der Anzeige-/Bedieneinheiten des Systems von Fig. 1.

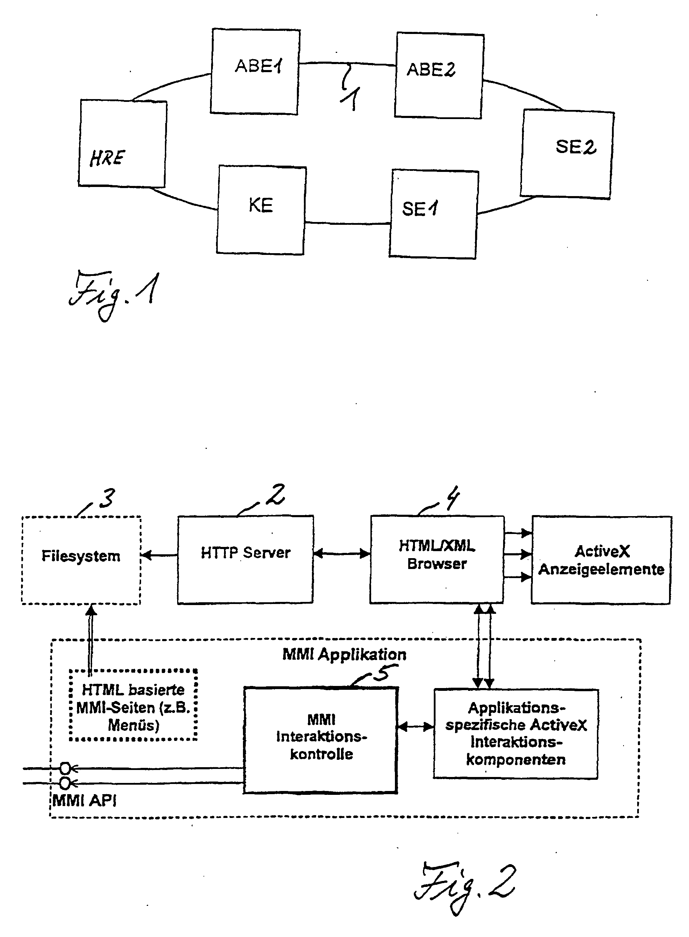

Fig. 1 zeigt der Übersichtlichkeit halber nur einen zur Erläuterung der vorliegenden Erfindung dienlichen Teil eines Fahrzeugkommunikationssystems. Wie daraus ersichtlich, beinhaltet dieses System einen Datenbus 1, an den eine Vielzahl von über den Bus 1 vernetzten Komponenten angeschlossen ist, von denen explizit eine zentrale Recheneinheit HRE, nachfolgend auch als Hauptrecheneinheit oder Steuerrechner bezeichnet, zwei Anzeige- und Bedieneinheiten ABE1, ABE2, eine Kommunikationseinheit KE und zwei Steuergeräteeinheiten SE1, SE2, auch einfach Steuereinheiten bezeichnet, gezeigt sind. Die Hauptrecheneinheit HRE übernimmt die Systemsteuerung des Kommunikationssystems und steuert insbesondere die Anzeigen und Interaktionen an der jeweiligen Anzeige-/Bedieneinheit ABE1, ABE2. Über die Kommunikationseinheit KE erfolgt die Steuerungskommunikation zwischen der Hauptrecheneinheit HRE und der jeweiligen Steuereinheit SE1, SE2. Zusätzlich kann das Fahrzeugkommunikationssystem weitere, nicht gezeigte Komponenten als Busknoten des Datenbusses 1 oder als Netzknoten eines ganzen Datenbusnetzwerks beinhalten, von dem der gezeigte Datenbus 1 dann einen Netzwerkteil bildet.

Für die jeweilige Anzeige- und Bedieneinheit ABE1, ABE2 ist charakteristischerweise eine auf dem HTML/XML-Seitenformat basierende grafische Benutzeroberfläche realisiert, für die als Grundelemente standardisierte HTML-, XML- und ActiveX-Module verwendet werden, wobei im Fall der Wahl von XML die Benutzung von ActiveX-Modulen entbehrlich ist. Fig. 2 zeigt eine Darstellung einer für diese Realisierung geeigneten Software-Architektur in der jeweiligen Anzeige-/Bedieneinheit ABE1, ABE2. Wie daraus ersichtlich, besteht die implementierte grafische Benutzeroberfläche aus einem MMI-Anwendungsmodul 2 in Form eines HTTP-Servers, der über ein zugehöriges Filesystem 3 HTML- oder XML-Seiten generiert und in der Recheneinheit oder verteilt auf die Recheneinheit und die Anzeige-/Bedieneinheit implementiert ist, sowie aus einem zugehörigen Browser oder Interpreter 4 in der Anzeige-/Bedieneinheit zur Darstellung dieser generierten Seiten. Der Browser 4 unterstützt beispielsweise HTML-,XML-, Bild- und Textdateien. Seiten können auch fest auf dem Server abgelegt sein.

Das implementierte ActiveX-Modul beinhaltet ActiveX-Anzeigeelemente, wie z.B. Icons, und ActiveX-Interaktionskomponenten, wie z.B. Listenbehandlung, wobei letztere applikationsspezifisch sein können. Eine in der Anzeige-/Bedieneinheit implementierte MMI-Applikation umfaßt einen Teil 5 eines MMI-Interaktionskontrollmoduls, das die Abläufe zwischen den ActiveX-Interaktionskomponenten und einem zentralen Steuerteil des Steuerrechners regelt. Dieses Modul kann aus zwei Teilen bestehen, von denen sich der eine lokal in der Anzeige-/Bedieneinheit und der andere in der Hauptrecheneinheit befindet. Die Kommunikation von und zum Datenbus 1 erfolgt über eine zugehörige MMI-API. Der in der Hauptrecheneinheit befindliche MMI-Interaktionskontrollteil setzt dabei auf die zentrale Steuerung des Systems auf, die zugleich die Kommunikations- und Steuereinheiten bedient. Von der MMI-Applikation bereitgestellte, HTML-basierte MMI-Seiten, wie beispielsweise Menüs, werden dem Filesystem 3 zugeleitet.

Die Kommunikation zwischen der Anzeige-/Bedieneinheit und der Hauptrecheneinheit HRE erfolgt über den Datenbus 1, der hierzu eine geeignete Transportschicht aufweist, z.B. vom Typ TCP/IP. Als Datenbus 1 ist z.B. der bekannte optische Datenbus MOST geeignet.

Der beschriebene Systemaufbau hat folgende Vorteile. Von dem Steuerrechner HRE können Anzeige-/Bedieneinheiten unterschiedlicher Ausprägung bedient werden, ohne daß dieser die Fähigkeiten der jeweiligen Anzeige-/Bedieneinheit, z.B. deren Display-Qualität, kennen und berücksichtigen muß. Der Nutzen des vorliegenden Systemaufbaus ist hierbei umso größer, je mehr Anzeige-/Bedieneinheiten von der Hauptrecheneinheit HRE zu bedienen sind. Änderungen in der Benutzeroberfläche an einem Objekt, z.B. im Design eines Zeigerpfeils, brauchen nur in der betreffenden Anzeige-/Bedieneinheit durchgeführt werden. Die MMI-Applikation ist plattform- und sprachunabhängig beschreibbar. Die Integration neuer Funktionen im Steuerrechner HRE erfordert keine Änderung der Anzeige-/Bedieneinheiten, wenn die dort bereits vorhandenen Grafikelemente einer hierfür zweckmäßigerweise vorgesehenen Bibliothek der ActiveX-Anzeigeelemente ausreichen, so daß einfache Ergänzungen und Aktualisierungen der Software im Steuerrechner möglich sind.

Als weiterer Vorteil erlaubt das Einbinden von ActiveX-Interaktionskomponenten in HTML-Seiten die Benutzung bzw. den Aufruf von Software-Komponenten, die lokal vorhanden sind, und von Komponenten, die sich in anderen Geräteeinheiten am Bus 1 befinden. Eine vergleichsweise schnelle Reaktion auf Benutzereingaben wird dadurch ermöglicht, daß die wichtigsten ActiveX-Anzeigeelemente und - Interaktionskomponenten in der besagten Bibliothek der jeweiligen Anzeige-/Bedieneinheit gehalten werden und dazu an die physikalischen Gegebenheiten der betreffenden Anzeige/Bedieneinheit angepaßt sind. Die ActiveX-Objekte können applikationsabhängig sein und auf dem Steuerrechner oder in einer jeweiligen Anzeige-/Bedieneinheit laufen.

## Patentansprüche

1. Fahrzeugkommunikationssystem mit
- einem Datenbus (1) und daran angeschlossenen Komponenten, unter denen sich wenigstens eine Anzeige-/Bedieneinheit (ABE1, ABE2) und eine diese steuernde Recheneinheit (HRE) befinden, wobei
- in der wenigstens einen Anzeige-/Bedieneinheit (ABE1, ABE2) und der diese steuernden Recheneinheit (HRE) eine auf dem HTML/XML-Seitenformat basierende, grafische Benutzeroberfläche implementiert ist, über die im Fahrzeug verbaute Steuergeräte menügesteuert ansteuerbar sind, wobei die grafische Benutzeroberfläche eine Mensch-Maschine-Interface-(MMI)-Anwendungseinheit (2) zur Generierung entsprechender Mensch-Maschine-Interface-(MMI)-Seiten im HTML/XML-Format umfaßt, wobei sich die Mensch-Maschine-Interface-(MMI)-Anwendungseinheit (2) in der Recheneinheit (HRE) befindet oder auf die Recheneinheit (HRE) und die Anzeige-/Bedieneinheit (ABE1, ABE2) verteilt implementiert ist und wobei die grafische Benutzeroberfläche einen Browser (4) zur Darstellung dieser generierten Seiten in der Anzeige-/Bedieneinheit umfaßt.

2. Fahrzeugkommunikationssystem nach Anspruch 1 , weiter
**dadurch gekennzeichnet, daß**
ein ActiveX-Modul in der Anzeige-/Bedieneinheit (ABE1, ABE2) und/oder der Recheneinheit (HRE) implementiert ist, das ActiveX-Anzeigeelemente und ActiveX-Interaktionskomponenten umfaßt.

3. Fahrzeugkommunikationssystem nach Anspruch 2, weiter
**dadurch gekennzeichnet, daß**
ein Mensch-Maschine-Interface-(MMI)-Interaktionskontrollmodul (5) in der Anzeige-/Bedieneinheit (ABE1, ABE2) und/oder der Recheneinheit (HRE) implementiert ist, über das die ActiveX-Interaktionskomponenten durch einen zentralen Steuerteil der Recheneinheit angesteuert werden.

4. Fahrzeugkommunikationssystem nach Anspruch 3, weiter
**dadurch gekennzeichnet, daß**
der zentrale Steuerteil der Recheneinheit (HRE) auch zur Ansteuerung einer oder mehrerer, an den Datenbus (1) angeschlossener Kommunikations- und/oder Steuergeräteeinheiten (KE, SE1, SE2) dient.

## Claims

1. A vehicle communication system having
- a databus (1) to which are connected components which comprise at least one display/operating unit (ABE1, ABE2) and an arithmetic unit (HRE) which controls them,
- there being implemented in the at least one display/operating unit (ABE1, ABE2) and the arithmetic unit (HRE) controlling it a graphic user interface based on the HTML/XML page format via which control devices integrated in the vehicle can be triggered driven by a menu, the graphic user interface comprising a man/machine interface (MMI) application unit (2) for the generation of appropriate man/machine interface (MMI) pages in HTML/XML format, the man/machine interface (MMI) application unit (2) either being located in the arithmetic unit (HRE) or implemented across the arithmetic unit (HRE) and the display unit (ABE1, ABE2), and the graphic user interface comprising a browser (4) to display the pages generated in the display/operating unit.

2. A vehicle communication system in accordance with claim 1, further
**characterised in that**
implemented in the display/operating unit (ABE1, ABE2) and/or the arithmetic unit (HRE) is an activeX module comprising activeX display elements and activeX interaction components.

3. A vehicle communication system in accordance with 2, further
**characterised in that**
implemented in the display/operating unit (ABE1, ABE2) and/or the arithmetic unit (HRE) is a man/machine interface (MMI) interaction control module (5) via which the activeX interaction components are triggered by a central control part in the arithmetic unit.

4. A vehicle communication system in accordance with 3, further
**characterised in that**
the central control part of the arithmetic unit (HRE) also serves to trigger one or more communication and/or control device units (KE, SE1, SE2) which are connected to the databus (1).

## Revendications

1. Système de communication pour véhicule avec
- un bus de données (1) et des composants qui y sont raccordés, parmi lesquels se trouvent au moins une unité d'affichage et de commande (ABE1, ABE2) et une unité de calcul (HRE) qui les commande, dans lequel dans l'au moins une unité d'affichage et de commande (ABE1, ABE2) et dans l'unité de calcul (HRE) qui les commande est mise en oeuvre une console d'utilisateur graphique basée sur le format de pages HTML/XML, par l'intermédiaire de laquelle des équipements de commande montés dans le véhicule peuvent être activés en étant commandés par un menu, dans lequel la console d'utilisateur graphique comprend une unité d'application à interface homme-machine (MMI)(2), dans lequel l'unité d'application à interface homme-machine (MMI)(2) se trouve dans l'unité de calcul (HRE) ou est mise en oeuvre en étant répartie sur l'unité de calcul (HRE) et sur l'unité d'affichage et de commande (ABE1, ABE2) et dans lequel la console graphique d'utilisateur comprend, pour générer des pages correspondantes d'interface homme-machine (MMI) dans le format HTML/XML, un browser (4) pour représenter ces pages générées dans l'unité d'affichage et de commande.

2. Système de communication pour véhicule selon la revendication 1, **caractérisé en outre en ce qu'**un module ActiveX comprenant des éléments d'affichage ActiveX et des composants d'interaction ActiveX est mis en oeuvre dans l'unité d'affichage et de commande (ABE1, ABE2) et/ou dans l'unité de calcul (HRE).

3. Système de communication pour véhicule selon la revendication 2, **caractérisé en outre en ce qu'**un module de contrôle d'interaction d'interface homme-machine (MMI)(5), par l'intermédiaire duquel les composants d'interaction ActiveX sont activés par une partie de commande centrale de l'unité de calcul, est mis en oeuvre dans l'unité d'affichage et de commande (ABE1, ABE2) et/ou dans l'unité de calcul (HRE).

4. Système de communication pour véhicule selon la revendication 3, **caractérisé en outre en ce que** la partie centrale de commande de l'unité de calcul (HRE) sert aussi à l'activation d'une ou de plusieurs unités d'équipements de communication et/ou de commande (KE, SE1, SE2) raccordées au bus de données (1).
